# EUROPÄISCHE PATENTSCHRIFT

(11) **EP 1 960 645 B1**
(45) Veröffentlichungstag und Bekanntmachung des Hinweises auf die Patenterteilung: **15.04.2009**
(21) Anmeldenummer: 06841278.2
(22) Anmeldetag: 01.12.2006
(51) Int. Cl.: F01N 11/00

(54) **VERFAHREN ZUR DIAGNOSE EINES IN EINEM ABGASBEREICH EINER BRENNKRAFTMASCHINE ANGEORDNETEN KATALYSATORS UND VORRICHTUNG ZUR DURCHFÜHRUNG DES VERFAHRENS**
METHOD FOR THE DIAGNOSIS OF A CATALYTIC CONVERTER WHICH IS ARRANGED IN AN EXHAUST AREA OF AN INTERNAL COMBUSTION ENGINE AND DEVICE FOR CARRYING OUT SAID METHOD
PROCEDE DE DIAGNOSTIC POUR UN CATALYSEUR SITUE DANS LA ZONE DES GAZ D'ECHAPPEMENT D'UN MOTEUR A COMBUSTION INTERNE ET DISPOSITIF PERMETTANT LA MISE EN OEUVRE DUDIT PROCEDE

(30) Priorität: 05.12.2005 DE 102005057957; 08.12.2005 DE 102005058524; 23.12.2005 DE 102005062116
(43) Veröffentlichungstag der Anmeldung: 27.08.2008
(73) Patentinhaber: ROBERT BOSCH GMBH, 70442 Stuttgart (DE)
(72) Erfinder: CLEMENT, Albrecht, 71665 Vaihingen (DE); WOLL, Christoph, 70839 Gerlingen (DE); HOTZEL, Richard, 70469 Stuttgart (DE); LABBE, Magnus, 71696 Moeglingen (DE)
(86) Internationale Anmeldenummer: PCT/EP2006/069187
(87) Internationale Veröffentlichungsnummer: WO 2007/065852

(56) Entgegenhaltungen:
- DE-A1- 4 128 823
- DE-A1- 19 801 626
- US-A- 5 165 230

## Beschreibung

### Stand der Technik

Die Erfindung geht aus von einem Verfahren zur Diagnose (On-Board-Diagnose) eines in einem Abgasbereich einer Brennkraftmaschine angeordneten Katalysators und von einer Vorrichtung zur Durchführung des Verfahrens nach der Gattung der unabhängigen Ansprüche.

Die Erfindung betrifft weiterhin ein Steuergerätprogramm sowie ein Steuergerät-Programmprodukt.

Das Sauerstoff-Speichervermögen eines Katalysators wird dazu ausgenutzt, in Magerphasen des einer Brennkraftmaschine zugeführten Luft-Kraftstoff-Gemischs Sauerstoff aufzunehmen und in Fettphasen wieder abzugeben. Hierdurch wird erreicht, dass unerwünschte Abgaskomponenten effizient konvertiert werden können. Mit zunehmender Alterung des Katalysators nimmt das Sauerstoff-Speichervermögen ab. Hierdurch kann in den Fettphasen nicht mehr genügend Sauerstoff für Oxidationsreaktionen zur Verfügung gestellt werden.

Ein auf der Bewertung der Sauerstoff-Speicherfähigkeit eines Katalysators beruhendes Katalysator-Diagnoseverfahren ist in der Patentanmeldung DE 24 44 334. beschrieben. Der Brennkraftmaschine werden abwechselnd ein fettes Luft-Kraftstoff-Gemisch mit einem Lambda von 0,95 und ein mageres Luft-KraftstoffGemisch mit einem Lambda von 1,05 zugeführt. Ein stromabwärts nach dem Katalysator angeordneter Sprung-Lambdasensor detektiert in einer Fettphase das Auftreten von Sauerstoffmangel und in einer Magerphase das Auftreten von Sauerstoffüberschuss. Das Signal des Stromabwärts-Sprung-Lambdasensors stoppt einen Zeitgeber, der von einem Signal gestartet wird, das ein stromaufwärts vor dem Katalysator angeordneter Sprung-Lambdasensor bereitstellt. Die Vorgabe der Luftzahl Lambda in den Fett- und Magerphasen ist trotz der eingesetzten Sprung-Lambdasensoren im Rahmen einer Lambdaregelung vorgesehen. Die vorgegebenen Abweichungen der Luftzahl Lambda vom Wert 1 für eine stöchiometrische Verbrennung sind derart festgelegt, dass die Kennlinien der beiden Sprung-Lambdasensoren gerade noch ausreichen, die Abweichungen vom Wert 1 wenigstens näherungsweise quantitativ zu erfassen. Voraussetzung für die Diagnose ist ein wenigstens näherungsweise konstanter Gasdurchsatz. Dieser wird dadurch sichergestellt, dass die Diagnose nur freigegeben wird, wenn ein bestimmtes, von einem Luftmengensensor und/oder Drosselklappen-Positionsgeber bereitgestelltes Signal vorliegt.

Das im DE-Patent 41 12 480 beschriebene Katalysator-Diagnoseverfahren, das ebenfalls auf der Bewertung der Sauerstoff-Speicherfähigkeit des Katalysators beruht, geht dadurch einen Schritt weiter, dass die dem Katalysator im Rahmen der Fett- und Magerphasen zugeführte Sauerstoffmenge quantitativ anhand der gemessenen Luftströmung und der stromaufwärts vor dem Katalysator mit einem Breitband-Lambdasensor gemessenen Luftzahl Lambda mit einer Integration berechnet wird.

Sofern stromaufwärts vor dem Katalysator ein Sprung-Lambdasensor (Zweipunkt-Lambdasensor) eingesetzt ist, kann der Sauerstoffgehalt des eingetragenen Abgases quantitativ nicht ohne weiteres ermittelt werden. Dies gilt sowohl für das fette Gemisch als auch für das magere Gemisch. Ein Ansatz für eine Ermittlung des Sauerstoffgehalts im Abgas geht von einer korrekten Vorsteuerung des der Brennkraftmaschine zugeführten Luft-Kraftstoff-Gemischs aus. Ein Vorsteuerfehler beeinflusst jedoch das Diagnoseergebnis erheblich.

In der DE 33 41 015 A1 ist eine Kraftstoffsignal-Festlegung für die Gemischaufbereitung einer Brennkraftmaschine beschrieben, die einen Lambdaregler enthält, der eine Stellgröße in Abhängigkeit von der Differenz zwischen einem vorgegebenen Lambda-Sollwert und einem von einem Lambdasensor im Abgasstrom gemessenen die bereitstellt. Die Kraftstoffsignal-Festlegung enthält eine Vorsteuerung, die dafür sorgt, dass ein möglichst korrektes Kraftstoffsignal auch ohne Eingriff durch den Lambdaregler bereitgestellt wird. Einfluss auf das tatsächlich sich einstellende Lambda im Abgasstrom haben beispielsweise die Kraftstoffqualität, die Umgebungsbedingungen der Brennkraftmaschine und eine Drift der in einer Kraftstoffzumessung der Brennkraftmaschine verwendeten Bauteilen wie beispielsweise der Kraftstoff-Einspritzventile. Zur Kompensation dieser Einflüsse ist eine Adaption der Vorsteuerung vorgesehen, welche die Bereitstellung von mehreren Adaptionsgrößen vorsieht. Die Adaptionsgrößen beeinflussen die Festlegung eines Kraftstoffsignals durch multiplikative und/oder additive Eingriffe, die zusätzlich zum Eingriff durch der vom Lambdaregler bereitgestellten Stellgröße vorgesehen sind. Die Adaption kann als eine Langzeitadaption bezeichnet werden, bei welcher die Adaptionsgrößen über einen längeren Zeitraum, der weit im Minutenbereich liegt, durch Mittelwertbildungen festgelegt werden. Die Adaptionsgrößen werden weiterhin vorzugsweise in Abhängigkeit von Betriebszuständen der Brennkraftmaschine, beispielsweise der Drehzahl und der Last, festgelegt.

Der Erfindung liegt die Aufgabe zugrunde, ein Verfahren zur Diagnose eines in einem Abgasbereich einer Brennkraftmaschine angeordneten Katalysators und eine Vorrichtung zur Durchführung des Verfahrens anzugeben, die eine hohe Genauigkeit bei der Ermittlung der Sauerstoff-Speicherfähigkeit des Katalysators erzielen.

### Offenbarung der Erfindung

Die Aufgabe wird durch die in den unabhängigen Ansprüchen angegebenen Merkmale jeweils gelöst.

Die erfindungsgemäße Vorgehensweise erhöht die Genauigkeit beziehungsweise die Zuverlässigkeit der Katalysatordiagnose dadurch, dass die Sauerstoff-Speicherfähigkeit des Katalysators, welche der Diagnose zugrunde liegen soll, mit hoher Zuverlässigkeit ermittelt werden kann.

Vorgesehen ist eine Schnelladaption eines Lambdareglers, welche unmittelbar vor der Katalysatordiagnose durchgeführt wird. Die Schnelladaption unterscheidet sich von der aus dem Stand der Technik bekannten Adaption - welche im folgenden als Langzeitadaption bezeichnet wird - dadurch, dass die Schnelladaption innerhalb weniger Perioden der Lambdaregler-Regelschwingungen, das heißt, in wenigen Sekunden vorgenommen wird.

Die Schnelladaption ersetzt gegenüber der Langzeitadaption gespeicherte Korrekturwerte im Rahmen von größeren Änderungsschritten. Im Extremfall kann bereits nach einer Periode der Lambdaregler-Regelschwingung ein alter Korrekturwert ohne Zwischenschritte vollständig durch einen neuen Korrekturwert ersetzt werden.

Die Schnelladaption ermöglicht es, dass der sich während der anschließend durchgeführten Katalysatordiagnose einstellende Diagnosegemisch-Lambda-Ist-Signalverlauf weitgehend dem im Rahmen eines gesteuerten Betriebs vorgegebenen Diagnosegemisch-Lambda-Soll-Signalverlauf entspricht.

Bei der Schnelladaption wird in Kauf genommen, dass der wenigstens eine gespeicherte Korrekturwert nur für einen vergleichsweise kurzen Zeitraum Gültigkeit hat. In diesem kurzen Zeitraum ist jedoch die Katalysatordiagnose bereits abgeschlossen. Aufgrund des Risikos, dass der wenigstens eine gespeicherte Korrekturwert aufgrund von Störeinflüssen oder aufgrund von gegebenenfalls vorangegangenen dynamischen Vorgängen nicht dem im Rahmen der Langzeitadaption ermittelten Korrekturwert entspricht, wird deshalb nach der Katalysatordiagnose wieder auf die Langzeitadaption übergegangen.

Die Schnelladaption schafft zumindest für die Zeitdauer der Berechnung der Sauerstoff-Speicherfähigkeit des Katalysators definierte Bedingungen durch eine möglichst korrekte Lambdavorsteuerung, so dass von einer zuverlässigen Katalysatordiagnose ausgegangen werden kann, welche auf die Sauerstoff-Speicherfähigkeit des Katalysators aufbaut.

Vorteilhafte Weiterbildungen und Ausgestaltungen der erfindungsgemäßen Vorgehensweise ergeben sich aus abhängigen Ansprüchen.

Eine Ausgestaltung sieht vor, dass die Schnelladaption in Abhängigkeit von wenigstens einer Betriebsgröße der Brennkraftmaschine vorgenommen wird. Geeignete Betriebsgrößen sind beispielsweise die Drehzahl und/oder die Last der Brennkraftmaschine. Vorgesehen sein kann eine Überprüfung, ob die Betriebsgröße einen Schwellenwert über- oder unterschreitet. Vorzugsweise ist eine Überprüfung vorgesehen, ob die Betriebsgröße innerhalb eines zulässigen Bereichs liegt. Die Schnelladaption ermöglicht dadurch eine korrekte Vorsteuerung zumindest innerhalb des Betriebspunkts beziehungsweise des Betriebsbereichs, in welchem sie durchgeführt wurde.

Eine andere Ausgestaltung sieht vor, dass die Schnelladaption nur vorgenommen wird, wenn wenigstens näherungsweise ein stationärer Betriebszustand der Brennkraftmaschine vorliegt. Die Überprüfung kann beispielsweise einen Differenzialquotienten, angenähert durch einen Differenzenquotienten, der wenigstens einen Betriebsgröße der Brennkraftmaschine ermitteln und anhand eines Vergleichs mit einem Schwellenwert bewerten.

Diese Maßnahmen stellen einzelnen oder zusammen sicher, dass eine im Rahmen der Schnelladaption ermittelte Korrekturgröße zumindest während der unmittelbar anschließenden Katalysatordiagnose weitgehend korrekt ist.

Eine andere Ausgestaltung sieht eine Überprüfung vor, ob während der Schnelladaption und der Katalysatordiagnose wenigstens näherungsweise dieselben Betriebsbedingungen der Brennkraftmaschine vorliegen beziehungsweise vorgelegen haben. Bei einer Überschreitung eines vorgegebenen Maßes einer Abweichung wird die Diagnose abgebrochen beziehungsweise ein bereits ermitteltes Diagnoseergebnis verworfen. Diese Maßnahme stellt ebenfalls sicher, dass der gesteuerte Diagnosegemisch-Lambda-Soll-Signalverlauf, der Grundlage der Berechnung der Sauerstoff-Speicherfähigkeit des Katalysators ist, und der Diagnosegemisch-Lambda-Ist-Signalverlauf weitgehend übereinstimmen.

Eine Weiterbildung sieht die Ermittlung einer Abweichung zwischen dem Diagnosegemisch-Lambda-Ist-Signalverlauf und einem berechneten Diagnosegemisch-Lambda-Signalverlauf anhand derjenigen Zeitdifferenz vor, die zwischen einem Lambda-1-Durchgang des Diagnosegemisch-Lambda-Ist-Signalverlaufs und einem Lambda-1-Durchgang des berechneten Diagnosegemisch-Lambda-Signalverlaufs auftritt. Die Zeitdifferenz wird zur Korrektur des vorgegebenen Diagnosegemisch-Lambda-Soll-Signalverlaufs oder zum Abbruch der Diagnose herangezogen. Sofern eine signifikante Zeitdifferenz vorliegt, muss davon ausgegangen werden, dass der wenigstens eine Korrekturwert, der im Rahmen der Schnelladaption ermittelt wurde, nicht genau genug ermittelt werden konnte. Im Rahmen der hier vorgesehenen Korrektur des vorgegebenen Diagnosegemisch-Lambda-Soll-Signalverlaufs wird vorzugsweise unmittelbar in die Vorsteuerung des Lambdas eingegriffen und dadurch versucht, den Fehler bei der Ermittlung der Sauerstoff-Speicherfähigkeit des Katalysators zu minimieren.

Eine andere Ausgestaltung dieser Weiterbildung sieht vor, dass der Lambda-1-Durchgang des Diagnosegemisch-Lambda-Ist-Signalverlaufs anhand eines gemessenen Stromaufwärts-Lambdasignals mit einer Zweipunkt-Charakteristik beziehungsweise Sprung-Charakteristik erfasst wird. Ein Lambdasensor, der ein solches Sensorsignal mit Zweipunkt-Charakteristik beziehungsweise Sprung-Charakteristik zur Verfügung stellt, ist besonders preiswert erhältlich. Dadurch ergeben sich erhebliche Einsparungen beim Serieneinsatz der erfindungsgemäßen Katalysatordiagnose.

Die erfindungsgemäße Vorrichtung zur Durchführung des Verfahrens betrifft zunächst ein Steuergerät, welches zur Durchführung des Verfahrens speziell hergerichtet ist.

Das Steuergerät enthält vorzugsweise wenigstens einen elektrischen Speicher, in welchem die Verfahrensschritte als Steuergerätprogramm abgelegt sind.

Das erfindungsgemäße Steuergerätprogramm sieht vor, dass alle Schritte des erfindungsgemäßen Verfahrens ausgeführt werden, wenn es in einem Steuergerät abläuft.

Das Steuergerät-Programmprodukt mit einem auf einem maschinenlesbaren Träger gespeicherten Programmcode führt das erfindungsgemäße Verfahren aus, wenn das Programm in einem Steuergerät ausgeführt wird.

Weitere vorteilhafte Weiterbildungen und Ausgestaltungen der erfindungsgemäßen Vorgehensweise ergeben sich aus weiteren abhängigen Ansprüchen. Ausführungsbeispiele der Erfindung sind in der Zeichnung dargestellt und in der nachfolgenden Beschreibung näher erläutert.

Es zeigen:
- Figur 1: ein technisches Umfeld, in welchem ein erfindungsgemäßes Verfahren abläuft und
- Figur 2: Lambda-Signalverläufe in Abhängigkeit von der Zeit.

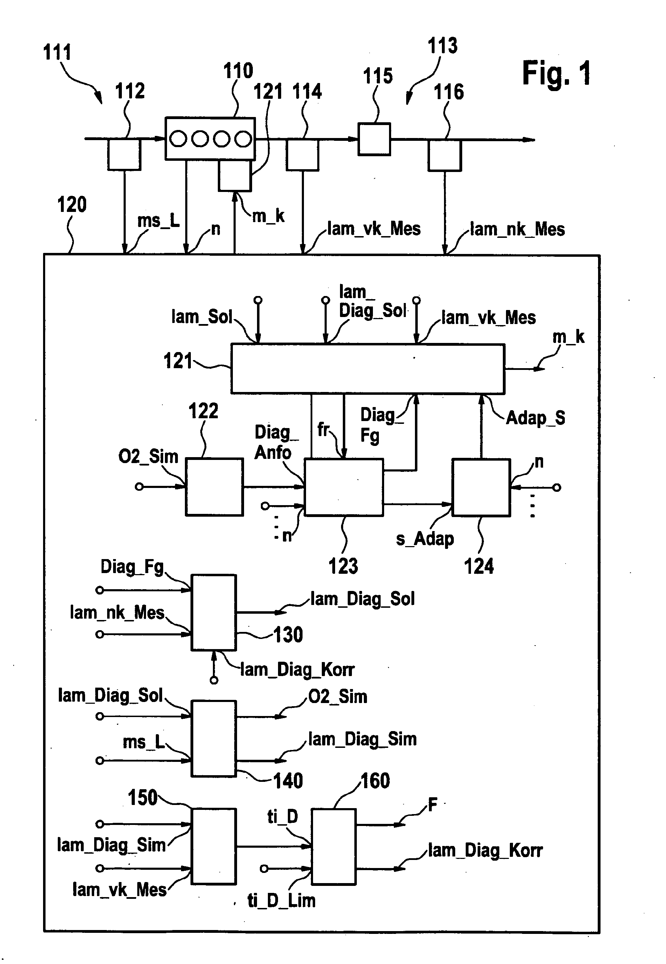

Figur 1 zeigt eine Brennkraftmaschine 110, in deren Ansaugbereich 111 eine Lufterfassung 112 und in deren Abgasbereich 113 ein Stromaufwärts-Lambdasensor 114, der stromaufwärts vor einem Katalysator 115 angeordnet ist, und ein Stromabwärts-Abgassensor 116, der stromabwärts nach dem Katalysator 115 angeordnet ist, vorgesehen sind.

Die Lufterfassung 112 stellt einem Steuergerät 120 ein Luftsignal ms_L, die Brennkraftmaschine 110 eine Drehzahl n, der Stromaufwärts-Lambdasensor 114 ein gemessenes Stromaufwärts-Lambdasignal lam_vK_Mes und der Stromabwärts-Lambdasensor 116 ein gemessenes Stromabwärts-Lambdasignal lam_nK_Mes zur Verfügung. Das Steuergerät 120 stellt einer Kraftstoff-Zumessung 121 ein Kraftstoffsignal m_K zur Verfügung.

Die beiden Lambdasensoren 114, 116 sind vorzugsweise als preiswerte Zweipunkt-Lambdasensoren beziehungsweise Sprung-Lambdasensoren realisiert, sodass die gemessenen Lambdasignale lam_vK_Mes, lam_nK_Mes Sprung-Charakteristik aufweisen. Die Lambdasensoren 114, 116 ermöglichen das Betreiben der Brennkraftmaschine 110 mit einem Luft-Kraftstoff-Betriebsgemisch, das auf einen Lambdawert im Bereich von Lambda = 1, beispielsweise im Wertebereich von Lambda = 0,995 und 1,005 mit hoher Genauigkeit geregelt werden kann.

Zur Betriebsgemischregelung ist ein Lambdaregler 121 vorgesehen, dem ein Betriebsgemisch-Lambda-Sollwert lam_Sol, ein Diagnosegemisch-Lambda-Soll-Signalverlauf lam_Diag_Sol, das gemessene Stromaufwärts-Lambdasignal lam_vK_Mes, ein Diagnose-Freigabesignal Diag_Fg sowie ein Schnelladaptionswert Adap_S zur Verfügung gestellt werden, und der das Kraftstoffsignal m_K bereitstellt.

Vorgesehen ist eine Diagnose des Katalysators 115, die auf einer Ermittlung zumindest eines Maßes für dessen Sauerstoff-Speicherfähigkeit beruht, die als Maß für die Alterung des Katalysators 115 herangezogen werden kann. Eine geringe Sauerstoff-Speicherfähigkeit bedeutet hierbei ein gealterter Katalysator 115.

Zur Durchführung der Diagnose ist eine Diagnosesteuerung 122 vorgesehen, die ein Diagnose-Anforderungssignal Diag_Anfo bereitstellt, wenn eine Katalysator Diagnose durchgeführt werden soll. Das Diagnose-Anforderungssignal Diag_Anfo wird einer Adaptionssteuerung 123 zur Verfügung gestellt, die zunächst vorzugsweise eine Überprüfung vornimmt, ob geeignete Betriebsbedingungen der Brennkraftmaschine 110 zur Durchführung der Katalysatordiagnose vorliegen. Die Betriebsbedingungen spiegeln sich in Betriebsgrößen der Brennkraftmaschine 110 wie beispielsweise der Drehzahl n oder der Last der Brennkraftmaschine 110 wider. Im gezeigten Ausführungsbeispiel wird der Adaptionssteuerung 123 zumindest die Drehzahl n zur Verfügung gestellt.

Überprüft werden kann, ob die wenigstens eine Betriebsgröße, beispielsweise die Drehzahl n, einen Schwellenwert über- oder unterschreitet. Vorzugsweise wird überprüft, ob die wenigstens eine Betriebsgröße n innerhalb eines Bereichs liegt. Vorzugsweise wird alternativ oder zusätzlich überprüft, ob wenigstens näherungsweise ein stationärer Betriebszustand der Brennkraftmaschine 110 vorliegt. Diese Überprüfung sieht eine Ermittlung und Bewertung des Differenzialquotienten der wenigstens einen Betriebsgröße n vor, welcher durch einen Differenzenquotienten angenähert werden kann.

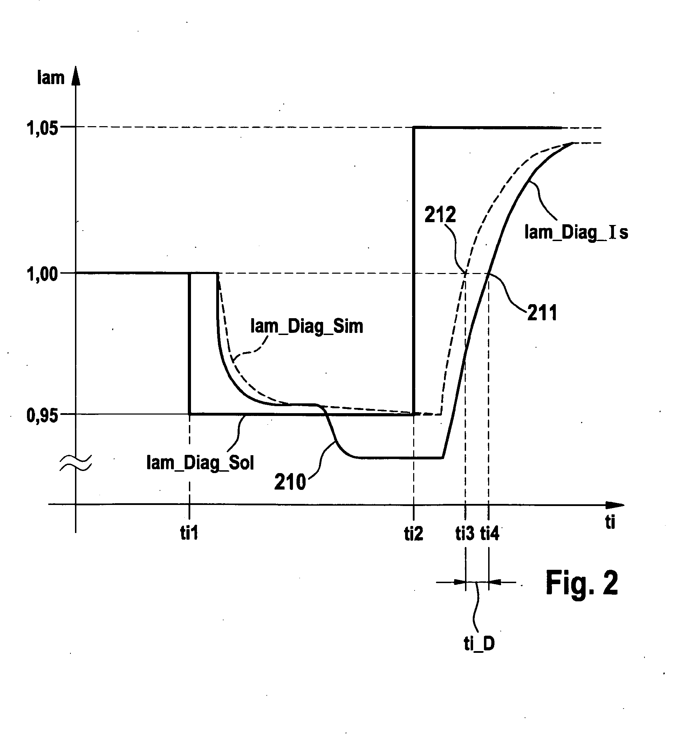

Da die Katalysatordiagnose im Rahmen des gesteuerten Betriebs der Brennkraftmaschine 110 durchgeführt wird, kann durch die Bewertung wenigstens einer Betriebsgröße n der Brennkraftmaschine 110 sichergestellt werden, dass die Schnelladaption zu einem Schnelladaptionswert Adap_S führt, der zumindest während der im Anschluss an die Schnelladaption durchgeführte Katalysatordiagnose für eine möglichst geringe Abweichung zwischen dem vorgegebenen Diagnose-Lambda-Soll-Signalverlauf lam_Diag_Sol und einem sich tatsächlich einstellenden DiagnoseLambda-Ist-Signalverlauf lam_Diag_Is führt, der in Figur 2 gezeigt ist.

Sofern die Betriebsbedingungen für die Schnelladaption geeignet sind, veranlasst die Adaptionssteuerung 123 die Schnelladaption. Die Schnelladaption kann dadurch durchgeführt werden, dass eine Stellgröße fr des Lambdareglers 121, die ein Maß für die Regelabweichung widerspiegelt, von der Adaptionssteuerung 123 beobachtet und im Rahmen der Schnelladaption möglichst zu null gemacht wird. Die Adaptionssteuerung 123 stellt einer Adaption 124 ein Adaptionssignal s_Adap zur Verfügung, die zumindest einen Schnelladaptionswert Adap_S ermittelt und dem Lambdaregler 121 zur Verfügung stellt. Vorzugsweise wird der Schnelladaptionswert Adap_S ebenfalls in Abhängigkeit von wenigstens einer Betriebsgröße n der Brennkraftmaschine 110 festgelegt.

Die Schnelladaption erfolgt innerhalb weniger Perioden der Regelschwingung des Lambdareglers 121 und somit innerhalb weniger Sekunden. Bei einem erfolgreichen Abschluss der Schnelladaption gibt die Adaptionssteuerung 123 das Diagnose-Freigabesignal Diag_Fg aus, das den Lambdaregler 121 dazu veranlasst, anstelle des Betriebsgemisch-Lambda-Sollwerts lam_Sol den Diagnosegemisch-Lambda-Soll-Signalverlauf lam_Diag_Sol vorzugeben, welchen eine Kenngrößen-Festlegung 130 bereitstellt, welcher ebenfalls das Diagnose-Freigabesignal Diag_Fg sowie ein Diagnoselambda-Korrekturwert lam_Diag_Korr zur Verfügung gestellt werden.

Vor einem in Figur 2 gezeigten ersten Zeitpunkt ti1 wird die Brennkraftmaschine 110 mit einem Betriebsgemisch betrieben, dessen Lambdawert auf beispielsweise Lambda = 1 wenigstens näherungsweise festgelegt ist. Zum ersten Zeitpunkt ti1 tritt das Diagnose-Freigabesignal Diag_Fg auf. Die Kenngrößen-Festlegung 130 veranlasst daraufhin das Betreiben der Brennkraftmaschine 110 mit einem Diagnosegemisch, welches auf einen Lambdawert von beispielsweise Lambda = 0,95 festgelegt wird. Die Änderung auf das neue Lambda im Rahmen der Katalysatordiagnose erfolgt vorzugsweise jeweils sprungförmig in Abhängigkeit vom gemessenen Stromabwärts- Lambda-Messwert lam_nK_Mes. Der zeitliche Verlauf des Lambdas des Diagnosegemischs ist in Figur 2 als Diagnosegemisch-Lambda-Soll-Signalverlauf lam_Diag_Sol eingetragen.

Die Umschaltung zu einem zweiten Zeitpunkt ti2 erfolgt in Abhängigkeit von dem vom Stromabwärts-Lambdasensor 116 bereitgestellten gemessenen Lambdasignal lam_nK_Mes. Die Änderung wird vorgenommen, wenn das gemessene, nicht dargestellte Stromabwärts-Lambdasignal lam_nK_Mes wenigstens näherungsweise einen Lambda-1-Durchgang aufweist, der den Durchbruch des Sauerstoffmangels stromabwärts nach dem Katalysator 115 signalisiert. Danach legt die Kenngrößen-Festlegung 130 den Diagnosegemisch-Lambda-Soll-Signalverlauf lam_Diag_Sol auf ein mageres Lambda von beispielsweise 1,05 fest. Eine nicht näher gezeigte weitere Umschaltung auf das fette Diagnosegemisch mit einem Lambda von 0,95 erfolgt, wenn im gemessenen Stromabwärts-Lambdasignal lam_nK_Mes wieder ein Lambda-1-Durchgang auftritt, der den Durchbruch des Sauerstoffüberschusses im Katalysator 115 signalisiert.

Die Sauerstoff-Speicherfähigkeit 02_Sim des Katalysators 115 kann anhand eines Integrals in einer Kenngrößen-Berechnung 140 ermittelt werden, der das Luftsignal ms_L und der Diagnosegemisch-Lambda-Soll-Signalverlauf lam_Diag_Sol zur Verfügung gestellt werden. Die Integration wird über diejenige Zeitdauer durchgeführt, während welcher der Diagnosegemisch-Lambda-Soll-Signalverlauf lam_Diag_Sol ein mageres Lambda von beispielsweise 1,05 aufweist.

Vorzugsweise erstreckt sich die Katalysatordiagnose über mehrere Perioden des Diagnosegemisch-Lambda-Soll-Signalverlaufs lam_Diag_Sol, so dass ein Mittelwert der Sauerstoff-Speicherfähigkeit des Katalysators gebildet werden kann.

Bei der Ermittlung der Sauerstoff-Speicherfähigkeit und somit des Diagnoseergebnisses wird vorausgesetzt, dass das Lambda des tatsächlich im Abgasbereich 113 auftretenden Diagnosegemisch-Lambda-Ist-Signalverlauf lam_Diag_Is mit dem vorgegebenen Diagnosegemisch-Lambda-Soll-Signalverlauf lam_Diag_Sol - abgesehen von bekannten Signalverzögerungen durch Laufzeiten und abgesehen von Einschwingvorgängen - weitgehend übereinstimmt. Eventuell auftretende Abweichungen wirken sich unmittelbar auf das Diagnoseergebnis aus. Für eine weitgehende Übereinstimmung wird mit der Schnelladaption gesorgt.

Im gezeigten Ausführungsbeispiel wird jedoch davon ausgegangen, dass trotz der bereits durchgeführten Schnelladaption zwischen dem ersten und zweiten Zeitpunkt ti1, ti2 eine Abweichung 210 aufgetreten ist. Das bedeutet, dass die Schnelladaption das Auftreten der Abweichung 210 nicht vollständig verhindern konnte.

Vorgesehen ist eine Zeitdifferenz-Ermittlung 150, welche eine Zeitdifferenz ti_D ermittelt, die zwischen einem Lambda-1-Durchgang 211 des Diagnosegemisch-Lambda-Ist-Signalverlaufs lam_Diag_Is und dem Lambda-1-Durchgang 212 eines von der Kenngrößen-Berechnung 140 berechneten Diagnosegemisch-Lambda-Signalverlaufs lam_Diag_Sim auftritt. Eine geringe Zeitdifferenz ti_D entspricht einer guten Übereinstimmung zwischen dem Diagnosegemisch-Lambda-Ist-Signalverlauf lam_Diag_Is und dem berechneten Diagnosegemisch-Lambda-Signalverlauf lam_Diag_Sim. In diesem Fall kann die von der Kenngrößen-Berechnung 140 ermittelte Sauerstoff-Speicherfähigkeit O2_Sim noch als zuverlässig gelten und der Diagnose zugrunde gelegt werden. Eine größere Zeitdifferenz ti_D in positiver oder negativer Richtung deutet auf eine höhere Abweichung 210 hin, sodass die ermittelte Sauerstoff-Speicherfähigkeit O2_Sim voraussichtlich fehlerhaft ist und das Diagnoseergebnis entsprechend unzuverlässig ausfällt.

Die ermittelte Zeitdifferenz ti_D kann in einer Zeitdifferenz-Bewertung 160 dazu herangezogen werden, den Diagnoselambda-Korrekturwert lam_Diag_Korr bereitzustellen, welcher der Kenngrößen-Festlegung 130 zur Verfügung gestellt wird. Der Diagnoselambda-Korrekturwert lam_Diag_Korr soll nicht den Schnelladaptionswert Adap_S ersetzen, sondern in der Kenngrößenfestlegung 130 die Festlegung des Diagnosegemisch-Lambda-Soll-Signalverlaufs lam_Diag_Sol unmittelbar beeinflussen, so dass in den folgenden Perioden des Diagnosegemisch-Lambda-Soll-Signalverlaufs lam_Diag_Sol eine bessere Übereinstimmung zwischen dem gesteuerten Diagnosegemisch-Lambda-Soll-Signalverlauf lam_Diag_Sol und dem sich einstellenden Diagnosegemisch-Lambda-Ist-Signalverlauf lam_Diag_Is ergibt. Zur Beeinflussung des Diagnosegemisch-Lambda-Soll-Signalverlaufs lam_Diag_Sol kann in das Kraftstoffsignal m_K oder in die Luftzuführung der Brennkraftmaschine 110 eingegriffen werden.

Die ermittelte Zeitdifferenz ti_D kann in der Zeitdifferenz-Bewertung 160 weiterhin dazu herangezogen werden, ein Fehlersignal F zu ermitteln. Hierzu wird die Zeitdifferenz ti_D mit einem vorgegebenen Zeitdifferenz-Schwellenwert ti_D_Lim verglichen. Wenn die Zeitdifferenz ti_D den Zeitdifferenz-Schwellenwert ti_D_Lim überschreitet, wird das Fehlersignal F ausgegeben, mit dem beispielsweise signalisiert werden kann, dass das Diagnoseergebnis voraussichtlich unzuverlässig ist oder mit welchem die Diagnose insgesamt abgebrochen werden kann. Weiterhin kann das Fehlersignal F festlegen, dass ein bereits ermitteltes Diagnoseergebnis verworfen werden soll.

Zur weiteren Erhöhung der Zuverlässigkeit der Katalysatordiagnose kann eine Mittelwertbildung bei der Ermittlung des Lambda-1-Durchgangs 211 des Diagnosegemisch-Lambda-Ist-Signalverlaufs lam_Diag_Is vorgesehen sein. Die Mittelwertbildung sorgt bei einem von Rauschen überlagerten Diagnosegemisch-Lambda-Ist-Signalverlauf lam_Diag_Is dafür, dass bei einem Wechsel vom fetten zum mageren Diagnosegemisch nicht bereits ein erster, durch Rauschen bedingter Lambda-1-Durchgang 211 als tatsächlicher Lambda-1-Durchgang 211 gewertet wird.

Voraussetzung für die Mittelwertbildung ist die Festlegung eines Abtastintervalls für den Diagnosegemisch-Lambda-Ist-Signalverlauf lam_Diag_Is, das - bezogen auf den Figur 2 zugrunde liegenden Zeitmaßstab - erheblich kürzer ist, sodass um beispielsweise dem vierten Zeitbereich ti4 eine Vielzahl von Abtastwerten des Diagnosegemisch-Lambda-Ist-Signalverlaufs lam_Diag_Is vorliegen, damit eine Mittelwertbildung überhaupt möglich ist. Die Mittelwertbildung kann beispielsweise derart erfolgen, dass zunächst ein Verhältnis der Zeitintervalle gebildet wird, in welchen fettes und in welchen mageres Diagnosegemisch vorgelegen hat, und dass anschließend ein Vergleich mit einem Schwellenwert - beispielsweise 50 Prozent - vorgesehen ist.

## Patentansprüche

1. Verfahren zur Diagnose eines in einem Abgasbereich (113) einer Brennkraftmaschine (110) angeordneten Katalysators (115), das auf einer Ermittlung der Sauerstoff-Speicherfähigkeit (O2_Sim) des Katalysators (115) beruht, die anhand eines in Abhängigkeit von einem gemessenen Stromabwärts-Lambdasignal (lam_nK_Mes) vorgegebenen Diagnosegemisch-Lambda-Soll-Signalverlaufs (lam_Diag_Sol) mit fettem und mageren Lambdawerten ermittelt wird, wobei eine Langzeitadaption eines Lambdareglers (121) vorgenommen wird, **dadurch gekennzeichnet, dass** bei einem Diagnose-Anforderungssignal (Diag_Anfo) zunächst eine Schnelladaption des Lambdareglers (121) vorgenommen wird, dass anschließend während der Katalysatordiagnose der Lambdaregler (121) abgeschaltet und der Brennkraftmaschine (110) das Diagnosegemisch mit dem gesteuerten Diagnosegemisch-Lambda-Soll-Signalverlauf (lam_Diag_Sol) zugeführt wird und dass nach Abschluss der Diagnose von der Schnelladaption wieder zur Langzeitadaption gewechselt wird.

2. Verfahren nach Anspruch 1, **dadurch gekennzeichnet, dass** die Schnelladaption in Abhängigkeit von wenigstens einer Betriebsgröße (n) der Brennkraftmaschine (110) vorgenommen wird.

3. Verfahren nach Anspruch 1, **dadurch gekennzeichnet, dass** die Schnelladaption nur vorgenommen wird, wenn wenigstens näherungsweise ein stationärer Betriebszustand der Brennkraftmaschine (110) vorliegt.

4. Verfahren nach Anspruch 1, **dadurch gekennzeichnet, dass** eine Überprüfung vorgesehen ist, ob während der Schnelladaption und während der Katalysatordiagnose wenigstens eine Betriebsgröße (n) der Brennkraftmaschine (110) wenigstens näherungsweise übereinstimmt/ übereingestimmt hat und dass bei einer Überschreitung eines vorgegebenen Maßes einer Abweichung die Diagnose abgebrochen oder ein bereits ermitteltes Diagnoseergebnis verworfen wird.

5. Verfahren nach Anspruch 1, **dadurch gekennzeichnet, dass** eine Abweichung (210) zwischen einem Diagnosegemisch-Lambda-Ist-Signalverlauf (lam_Diag_Is) und einem berechneten Diagnosegemisch-Lambda-Signalverlauf (lam_Diag_Sim) anhand derjenigen Zeitdifferenz (ti_D) ermittelt wird, die zwischen einem Lambda-1-Durchgang (211) des Diagnosegemisch-Lambda-Ist-Signalverlaufs (lam_Diag_Is) und einem Lambda-1-Durchgang (212) des berechneten Diagnosegemisch-Lambda-Signalverlaufs (lam_Diag_Sim) auftritt, und dass die Zeitdifferenz (ti_D) zur Korrektur des vorgegebenen Diagnosegemisch-Lambda-Soll-Signalverlaufs (lam_Diag_Sol) mit einem Diagnoselambda-Korrekturwert (lam_Diag_Korr) und/oder zum Abbruch der Diagnose herangezogen wird.

6. Verfahren nach Anspruch 5, **dadurch gekennzeichnet, dass** der Lambda-1-Durchgang (211) des Diagnosegemisch-Lambda-Ist-Signalverlaufs (lam_Diag_Is) anhand eines gemessenen Stromaufwärts-Lambdasignals (lam_vK_Mes) mit Sprung-Charakteristik erfasst wird.

7. Vorrichtung zur Diagnose eines in einem Abgasbereich (113) einer Brennkraftmaschine (110) angeordneten Katalysators (115), **dadurch gekennzeichnet, dass** zur Durchführung des Verfahrens nach einem der vorhergehenden Ansprüche ein speziell hergerichtetes Steuergerät (120) vorgesehen ist.

8. Vorrichtung nach Anspruch 7, **dadurch gekennzeichnet, dass** stromaufwärts vor dem Katalysator (115) ein Sprung-Lambdasensor (114) angeordnet ist, der ein gemessenes Stromaufwärts-Lambdasignal (lam_vK_Mes) bereitstellt.

9. Steuergerätprogramm, das alle Schritte eines Verfahrens nach einem der Ansprüche 1 - 6 ausführt, wenn es in einem Steuergerät (120) abläuft.

10. Steuergerät-Programmprodukt mit einem auf einem maschinenlesbaren Träger gespeicherten Programmcode zur Durchführung des Verfahrens nach einem der Ansprüche 1 - 6, wenn das Programm in einem Steuergerät (120) ausgeführt wird.

## Claims

1. Method for the diagnosis of a catalytic converter (115) which is arranged in an exhaust area (113) of an internal combustion engine (110) and which is based on determining the oxygen storage capability (O2_Sim) of the catalytic converter (115), which oxygen storage capability (O2_Sim) is determined on the basis of a diagnostic mixture lambda setpoint signal profile (lam_Diag_Sol), which is predefined as a function of a measured downstream lambda signal (lam_nK_Mes), with rich and lean lambda values, wherein long-term adaptation of a lambda controller (121) is performed, **characterized in that**, when a diagnostic request signal (Diag-Anfo) occurs, high-speed adaptation of the lambda controller (121) is firstly performed, **in that**, during the catalytic converter diagnosis, the lambda controller (121) is subsequently switched off, and the diagnostic mixture with the controlled diagnostic mixture lambda setpoint signal profile (lam_Diag_Sol) is fed to the internal combustion engine (110), and **in that**, after the diagnosis has been terminated, the system is switched over from the high-speed adaptation back to long-term adaptation.

2. Method according to Claim 1, **characterized in that** the high-speed adaptation is performed as a function of at least one operating variable (n) of the internal combustion engine (110).

3. Method according to Claim 1, **characterized in that** the high-speed adaptation is performed only if an at least approximately steady-state operating condition of the internal combustion engine (110) is present.

4. Method according to Claim 1, **characterized in that** checking is provided to determine whether at least one operating variable (n) of the internal combustion engine (110) at least approximately corresponds/has corresponded during the high-speed adaptation and during the catalytic converter diagnosis, and **in that** if a predefined degree of deviation is exceeded, the diagnosis is aborted or a diagnostic result which has already been determined is rejected.

5. Method according to Claim 1, **characterized in that** a deviation (210) between a diagnostic lambda actual signal profile (lam_Diag_Is) and a calculated diagnostic mixture lambda signal profile (lam_Diag_Sim) is determined on the basis of that time difference (ti_D) which occurs between a lambda 1 crossing (211) of the diagnostic mixture lambda actual signal profile (lam_Diag_Is) and a lambda 1 crossing (212) of the calculated diagnostic mixture lambda signal profile (lam_Diag_Sim), and **in that** the time difference (ti_D) is used to correct the predefined diagnostic mixture lambda setpoint signal profile (lam_Diag_Sol) with a diagnostic lambda correction value (lam_Diag_Korr) and/or to abort the diagnosis.

6. Method according to Claim 5, **characterized in that** the lambda 1 crossing (211) of the diagnostic mixture lambda actual signal profile (lam_Diag_Is) is sensed on the basis of a measured upstream lambda signal (lam_vK_Mes) with a discontinuous characteristic.

7. Device for diagnosing a catalytic converter (115) which is arranged in an exhaust area (113) of an internal combustion engine (110), **characterized in that** a specially constructed control unit (120) is provided for carrying out the method according to one of the preceding claims.

8. Device according to Claim 7, **characterized in that** a discontinuous lambda sensor (114) is arranged upstream of the catalytic converter (115) and makes available a measured upstream lambda signal (lam_vK_Mes).

9. Control unit program which executes all the steps of a method according to one of Claims 1-6 when it runs in a control unit (120).

10. Control unit program product having a program code, stored on a machine-readable medium, for carrying out the method according to one of Claims 1-6 when the program is executed in a control unit (120).

## Revendications

1. Procédé de diagnostic d'un catalyseur (115) disposé dans la zone (113) des gaz d'échappement d'un moteur à combustion interne (110), ledit procédé reposant sur la détermination de la capacité (O2_Sim) d'accumulation d'oxygène du catalyseur (115), cette détermination étant réalisée à l'aide de l'évolution du signal de consigne du lambda du mélange de diagnostic (lam_Diag_Sol) prédéterminé par un signal mesuré du lambda en aval (lam_nK_Mes) avec des valeurs de lambda riche et de lambda pauvre, et avec adaptation à long terme d'un régulateur de lambda (121)
**caractérisé en ce que**
lors de l'application d'un signal de demande de diagnostic (Diag_Anfo), on réalise d'abord une adaptation rapide du régulateur de lambda (121),
**en ce qu'**ensuite, pendant le diagnostic du catalyseur, le régulateur de lambda (121) est débranché et on apporte au moteur à combustion interne (110) le mélange de diagnostic avec l'évolution du signal contrôlé de consigne de lambda du mélange de diagnostic (lam_Diag_Sol) et
**en ce que** lorsque le diagnostic est terminé, on passe de nouveau de l'adaptation rapide à l'adaptation à long terme.

2. Procédé selon la revendication 1, **caractérisé en ce que** l'adaptation rapide est réalisée en fonction d'au moins une grandeur de fonctionnement (n) du moteur à combustion interne (110).

3. Procédé selon la revendication 1, **caractérisé en ce que** l'adaptation rapide n'est réalisée que si le moteur à combustion interne (110) se trouve au moins de manière approchée en régime stationnaire.

4. Procédé selon la revendication 1, **caractérisé en ce qu'**on vérifie si pendant l'adaptation rapide et pendant le diagnostic du catalyseur, au moins une grandeur de fonctionnement (n) du moteur à combustion interne (110) correspond et/ou a correspondu au moins de manière approchée et **en ce que** si une valeur prédéterminée d'un écart est dépassée, le diagnostic est interrompu ou un résultat déjà déterminé du diagnostic est rejeté.

5. Procédé selon la revendication 1, **caractérisé en ce que** l'on détermine un écart (210) entre une évolution du signal effectif du lambda du mélange de diagnostic (lam_Diag_Is) et une évolution calculée du signal de lambda du mélange de diagnostic (lam_Diag_Sim) à l'aide de la différence de temps (ti_D) qui survient entre un passage (211) par 1 du lambda dans l'évolution du signal effectif du lambda du mélange de diagnostic (lam_Diag_Is) et un passage (212) par 1 du lambda dans l'évolution calculée du signal de lambda du mélange de diagnostic (lam_Diag_Sim) et **en ce que** la différence de temps (ti_D) est utilisée pour corriger l'évolution prédéterminée du signal de consigne du lambda du mélange de diagnostic (lam_Diag_Sol) par une valeur de correction du lambda de diagnostic (lam_Diag_Korr) et/ou pour interrompre le diagnostic.

6. Procédé selon la revendication 5, **caractérisé en ce que** le passage (211) par 1 du lambda de l'évolution du signal effectif du lambda du mélange de diagnostic (lam_Diag_Is) est déterminé à l'aide d'une mesure du signal de lambda en amont (lam_vK_Mes) avec une caractéristique de saut.

7. Dispositif de diagnostic d'un catalyseur (115) disposé dans la zone (113) des gaz d'échappement d'un moteur à combustion interne (110), **caractérisé en ce que**
l'on prévoit pour mettre en oeuvre le procédé selon l'une des revendications précédente un appareil de commande (120) conçu spécifiquement dans ce but.

8. Dispositif selon la revendication 7, **caractérisé en ce qu'**une sonde (114) de saut de lambda est disposée en amont du catalyseur (115) et délivre un signal de mesure du lambda en amont (lam_vK_Mes).

9. Programme pour appareil de commande qui exécute toutes les étapes d'un procédé selon l'une des revendications 1 à 6 lorsqu'il se déroule dans un appareil de commande (120).

10. Produit de programme pour appareil de commande qui présente un code de programme, conservé en mémoire sur un support lisible par machine, et qui met en oeuvre le procédé selon l'une des revendications 1 à 6 lorsque le programme est exécuté dans un appareil de commande (120).
